# EUROPÄISCHE PATENTSCHRIFT

(11) **EP 0 825 090 B1**
(45) Veröffentlichungstag und Bekanntmachung des Hinweises auf die Patenterteilung: **11.07.2001**
(21) Anmeldenummer: 97112811.1
(22) Anmeldetag: 25.07.1997
(51) Int. Cl.: B62D 1/11

(54) **Lenkradskelett für Kraftfahrzeuge**
Steering wheel structure for motor vehicle
Structure de volant de direction pour véhicule à moteur

(30) Priorität: 10.08.1996 DE 19632317
(43) Veröffentlichungstag der Anmeldung: 25.02.1998
(73) Patentinhaber: TRW Automotive Safety Systems GmbH & Co. KG, 63743 Aschaffenburg (DE)
(72) Erfinder: Drefahl, Klaus, 63457 Hanau (DE); Kreuzer, Martin, 63839 Kleinwallstadt (DE)
(74) Vertreter: Degwert, Hartmut, Dipl.-Phys.

(56) Entgegenhaltungen:
- EP-A- 0 369 520
- GB-A- 318 680
- US-A- 2 014 633
- US-A- 5 490 435

## Beschreibung

Die Erfindung betrifft ein Lenkradskelett für Kraftfahrzeuge, bei dem Nabe, Speichen und Kranz ganz oder teilweise aus einem Blechabschnitt bestehen, der durch Abkanten der Ränder einen U- oder L-förmigen Querschnitt mit einem sich im wesentlichen senkrecht zur Lenkradachse erstreckenden Basisbereich und sich im wesentlichen parallel zur Lenkradachse erstreckenden Schenkelbereichen erhalten hat, wie es beispielsweise aus der US-A-5 490 435 bekannt ist.

Derartige Lenkradskelette werden zur Herstellung von Lenkrädern für Kraftfahrzeuge benutzt. Sie haben den Vorteil, daß sie mit allen Komponenten einstückig aus einem einfachen Blechabschnitt hergestellt werden können, der durch spanlose Umformoperationen und durch Ausstanzen bzw. Ausschneiden seine endgültige Form erhält, wobei unterschiedlichen Anforderungen an die Gestaltfestigkeit der einzelnen Bauteile durch entsprechende Dimensionierung der U- bzw. L-förmigen Querschnitte Rechnung getragen werden kann.

Eine andere Anforderung an Lenkräder besteht darin, daß sie eine möglichst hohe Form-änderungsarbeit aufnehmen sollen, wenn der Fahrzeuglenker bei einem Unfall auf das Lenkrad prallt. Durch den Einbau eines Airbags wird die Verletzungsgefahr zwar schon stark herabgesetzt: darüber hinaus kann ein optimal gestaltetes Lenkrad noch erheblich zur Minderung der unfallbedingten Verletzungen beitragen.

Es besteht somit die Aufgabe, ein Lenkradskelett der eingangs genannten Art anzugeben, das neben den Vorteilen hinsichtlich kostengünstiger Herstellung auch im Hinblick auf die Aufnahme möglichst hoher Formänderungsarbeit optimal gestaltet ist, ohne daß Nachteile bei der Fertigung in Kauf genommen werden müssen.

Zur Lösung dieser Aufgabe wird erfindungsgemäß vorgeschlagen, daß bei dem gattungsmäßigen Lenkradskelett die Schenkel in Längsrichtung gesehen derart wellenförmig umgeformt sind, daß die basisnahen Schenkelenden praktisch keine Abweichung aus der Ursprungsebene erfahren, die freien, basisfernen Schenkel die maximale Abweichung aufweisen und die Abweichung über die Schenkelhöhe stetig zunehmend ausgebildet ist.

Auf diese Weise erhält man ein Bauteil, das sich bei unfallbedingter Überbelastung gezielt verformen kann, wobei man durch entsprechende wellenförmige Ausbildung der Schenkelendbereiche gezielt dafür sorgen kann, daß sich nacheinander zuerst die "weicher" ausgebildeten Bereiche und danach die zunehmend "härter" ausgebildeten Bereiche verformen. Es kann eine sog. "Selbstorganisation" der an der Umformung beteiligten Bereiche realisiert werden, die für ein gegebenes Lenkradskelett zu einem Maximum an Formänderungsarbeit führt und damit zu einer Minimierung der Unfallfolgen.

Da nicht vorhergesagt werden kann, wo genau bei einem Aufprall des Fahrzeuglenkers auf das Lenkrad im Lenkradskelett die höchsten Belastungen und damit die ersten Umformungen auftreten, ist es zweckmäßig, das gesamte gattungsmäßige Lenkradskelett mit der erfindungsgemäßen wellenförmigen Umformung der Schenkelendbereiche zu versehen, so daß die Anfangsumformung überall beginnen und sich über das gesamte Lenkradskelett fortsetzen kann.

In jedem Fall wird der Lenkradkranz gegenüber der an der relativ starren Lenkradsäule befestigten Lenkradnabe nach unten verbogen, d.h. daß auf der dem Fahrgastlenker zugewandten Seite des Lenkrades Zugkräfte auftreten. Legt man die erfindungsgemäß gewellten Schenkelenden des Lenkradskeletts auf diese Seite, werden die gewellten Schenkelenden unter dem Einfluß der Zugkräfte mehr oder weniger gestreckt. Im Vergleich mit nicht gewellten Schenkelenden ist das erfindungsgemäße Lenkradskelett unter derartigen Belastungen wesentlich nachgiebiger und daher zur Aufnahme von Formänderungsarbeit wesentlich besser geeignet. Mit zunehmender Streckung der gewellten Schenkelenden erhöht sich der Formänderungswiderstand, wodurch die Aufprallbewegung zunehmend stärker gebremst wird, was im Hinblick auf die Vermeidung von negativen Beschleunigungsspitzen und das Rückfederungsverhalten wünschenswert ist.

Selbstverständlich kann man das Lenkradskelett auch umgekehrt anordnen, so daß die gewellten Schenkelenden bei einem Unfall einer Druckbelastung unterworfen werden. In diesem Fall werden die Wellen weiter zusammengeschoben. Auch bei dieser Anordnung ist das Lenkradskelett "weicher" als ein Lenkradskelett mit nicht gewellten Schenkelenden. Im einzelnen kann so ein gattungsmäßiges Lenkradskelett durch die erfindungsgemäße Wellung der Schenkelenden an die verschiedensten Anforderungen angepaßt werden, wobei selbstverständlich die im normalen Betrieb erforderliche Formsteifigkeit erhalten bleiben muß.

Der anfängliche Formänderungswiderstand kann über das Ausmaß der Wellung, d.h. durch die damit eintretende Verfestigung des Blechwerkstoffs eingestellt werden.

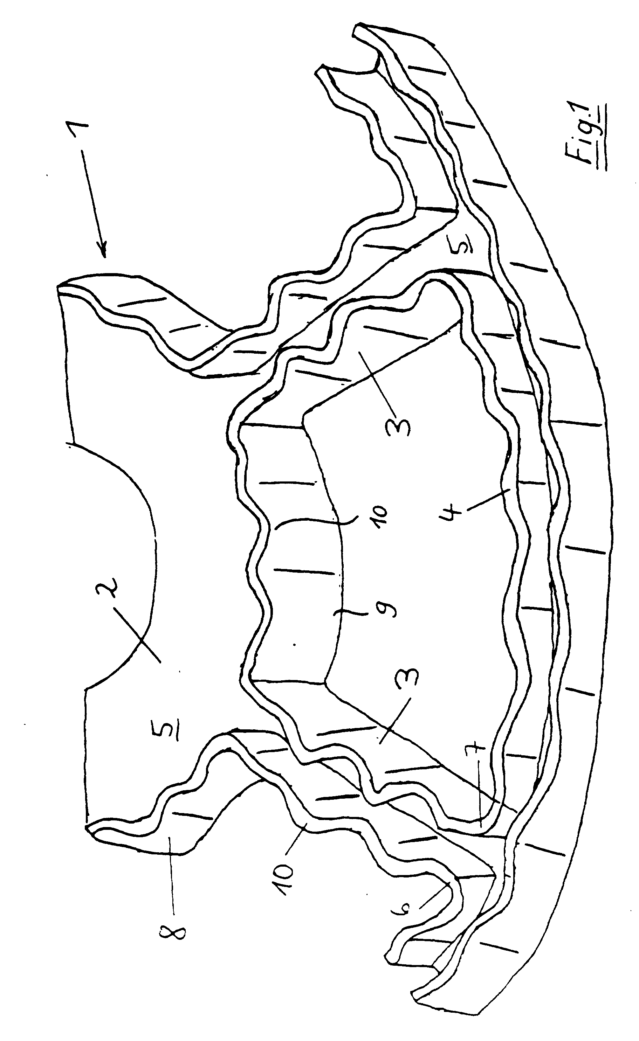

Vorteilhafte Ausgestaltungen des Erfindungsgedankens sind in den Unteransprüchen 2 bis 10 beschrieben. Weitere Einzelheiten werden anhand des in Fig. 1 dargestellten Ausführungsbeispiels der Erfindung näher erläutert.

Fig. 1 zeigt einen Teil eines Lenkradskeletts 1, das aus einem Blechabschnitt durch Ausstanzen, Abkanten und weitere spanlose Formgebungsschritte ausgeformt wurde. Das Lenkradskelett 1 besteht einstückig aus einer Nabe 2, Speichen 3 und einem Kranz 4, wobei durch Abkanten U- oder L-förmige Querschnitte gebildet wurden, mit einem sich senkrecht zur Lenkradachse erstreckenden Basisbereich 5, der in der Ebene des Blechabschnitts in seiner Ausgangsform liegt, und mit sich parallel zur Lenkradachse, d.h. im wesentlichen senkrecht zum Basisbereich 5 erstreckenden Schenkeln 6, 7, 8. Diese Schenkel 6, 7, 8 sind endseitig wellenförmig umgeformt und zwar so, daß die basisnahen Schenkelenden 9 praktisch keine Abweichung aus der Ursprungsebene erfahren, die freien basisfernen Schenkelenden 10 jedoch die maximale Abweichung aufweisen und die Abweichung über die Schenkelhöhe stetig zunehmend ausgebildet ist.

Dargestellt ist eine im wesentlichen sinusförmige Umformung der basisfernen Schenkelenden, die bedarfsweise mehr oder weniger stark ausgebildet sein kann und insbesondere zur gezielten Realisierung von mehr oder weniger "weichen" Bereichen am Lenkrad-skelett modifiziert wird.

Die Wellung der Schenkelenden kann auch eine andere Form haben, beispielsweise aus alternierend aneinandergesetzten Kreisbogenabschnitten bestehen oder zickzackförmig ausgeführt sein. Zusammen mit den anderen in den Unteransprüchen genannten Möglichkeiten läßt sich so ein an die unterschiedlichsten Anforderungen anpaßbares Lenkradskelett ausbilden. wobei sich mittels einfacher Versuche leicht ermitteln läßt, wie sich bei einer Gestaltfestigkeit für die Normalbelastung eine maximale Formänderungsarbeit bei unfallbedingter Überbelastung des Lenkradskeletts realisieren läßt. Außerdem läßt sich die bei Umformungen zwangsläufig auftretende Kaltverfestigung als Auslegungsparameter einbeziehen, die ihrerseits - falls erforderlich - durch Wärmebehandlung ganz oder teilweise rückgängig gemacht werden kann.

Die erfindungsgemäße Wellung der Schenkelenden bei einem gattungsmäßigen Lenkradskelett bietet für sich und in Verbindung mit den weiteren Material- und Formgebungseigenschaften die Möglichkeit, alle gestellten Forderungen hinsichtlich normaler Grundfestigkeit und Aufnahme von maximaler Formänderungsarbeit bei unfallbedingter Überbelastung zu erfüllen. Insbesondere können praktisch alle Bereiche des Lenkradskeletts in die Formänderungsarbeit einbezogen werden.

## Patentansprüche

1. Lenkradskelett (1) für Kraftfahrzeuge, bei dem Nabe (2), Speichen (3) und Kranz (4) ganz oder teilweise aus einem Blechabschnitt bestehen, der durch Abkanten der Ränder einen U- oder L-förmigen Querschnitt . mit einem sich im wesentlichen senkrecht zur Lenkradachse erstreckenden Basisbereich (5) und sich im wesentlichen parallel zur Lenkradachse erstreckende Schenkelbereiche (6, 7, 8) erhalten hat, dadurch gekennzeichnet, daß die Schenkel (6, 7, 8) in Längsrichtung gesehen derart wellenförmig umgeformt sind, daß die basisnahen Schenkelenden (9) praktisch keine Abweichung aus der Ursprungsebene erfahren, die freien, basisfernen Schenkelenden (10) die maximale Abweichung aufweisen und die Abweichung über die Schenkelhöhe stetig zunehmend ausgebildet ist.

2. Lenkradskelett nach Anspruch 1, dadurch gekennzeichnet, daß die Umformung der Schenkel (6, 7, 8) in Längsrichtung gesehen sinusförmig gestaltet ist.

3. Lenkradskelett nach Anspruch 1, dadurch gekennzeichnet, daß die Umformung der Schenkel (6, 7, 8) in Längsrichtung gesehen als Folge alternierender Kreisbogenabschnitte gestaltet ist. .

4. Lenkradskelett nach Anspruch 1, dadurch gekennzeichnet, daß die Umformung der Schenkel (6, 7, 8) in Längsrichtung gesehen abgerundet, zickzackförmig gestaltet ist.

5. Lenkradskelett nach einem der Ansprüche 1 bis 4, dadurch gekennzeichnet, daß die Umformung der Schenkel (6. 7, 8) in Längsrichtung gesehen mit unterschiedlich großer Abweichung aus der Ursprungsebene ausgebildet ist.

6. Lenkradskelett nach einem der Ansprüche 1 bis 5, dadurch gekennzeichnet, daß die Umformung der Schenkel (6, 7, 8) in Längsrichtung gesehen mit unterschiedlich großer Periode ausgebildet ist.

7. Lenkradskelett nach einem der Ansprüche 1 bis 6, dadurch gekennzeichnet, daß durch Umformung eine gezielte Kalterfestigung des Materials im Skelett insgesamt oder in Teilbereichen erzeugt worden ist.

8. Lenkradskelett nach Anspruch 7, dadurch gekennzeichnet, daß die Kaltverfestigung durch gezielte Wärmebehandlung bereichsweise aufgehoben ist.

9. Lenkradskelett nach einem der Ansprüche 1 bis 8, dadurch gekennzeichnet, daß die Umformung hinsichtlich Umfang und Anordnung so ausgebildet ist, daß das Lenkrad im Falle einer crashbedingten Verformung ein Maximum an Formänderungsarbeit ohne große Lastspitzen aufnehmen kann.

10. Lenkradskelett nach einem der Ansprüche 1 bis 9, dadurch gekennzeichnet, daß die Umformungen auf das gewählte Ausgangsmaterial abgestimmt sind.

## Claims

1. A steering wheel armature (1) for a motor vehicle, in which the hub (2), the spokes (3), and the rim (4) are entirely or partly made out of a sheet metal section having a cross-section in the shape of a U or L produced by folding the edges, with a base region (5) extending substantially perpendicular to the axis of the steering wheel and leg regions (6, 7, 8) extending substantially parallel to the axis of the steering wheel, characterized in that the legs (6, 7, 8), as viewed longitudinally, are reshaped in the form of undulations such that the ends (9) of the legs in the vicinity of the base experience virtually no deviation from the original plane, the free ends (10) of the legs remote from the base present the maximum deviation, and the deviation is designed to increase continuously with the height of the legs.

2. The steering wheel armature according to claim 1, characterized in that the reshaping of the legs (6, 7, 8) is designed sinusoidal as viewed longitudinally.

3. The steering wheel armature according to claim 1, characterized in that the reshaping of the legs (6, 7, 8) is designed as a series of alternating circular arc segments as viewed longitudinally.

4. The steering wheel armature according to claim 1, characterized in that the reshaping of the legs (6, 7, 8) is designed in the shape of rounded zigzags as viewed longitudinally.

5. The steering wheel armature according to any of claims 1 to 4, characterized in that the reshaping of the legs (6, 7, 8) is designed to vary in extent from the original plane as viewed longitudinally.

6. The steering wheel armature according to any of claims 1 to 5, characterized in that the reshaping of the legs (6, 7, 8) is designed to vary in period as viewed longitudinally.

7. The steering wheel armature according to any of claims 1 to 6, characterized in that a reshaping has produced a selective strain-hardening of the material in the armature in all or in partial regions.

8. The steering wheel armature according to claim 7, characterized in that the strain-hardening is neutralized in some regions by a selective heat treatment.

9. The steering wheel armature according to any of claims 1 to 8, characterized in that the reshaping is designed with respect to its extent and arrangement such that in the event of a crash-induced deformation, the steering wheel is able to absorb a maximum deformation work without large peak loads.

10. The steering wheel armature according to any of claims 1 to 9, characterized in that the reshapings are adapted to the selected starting material.

## Revendications

1. Armature de volant (1) pour véhicules automobiles, dans lequel le moyeu (2), les rayons (3) et la couronne (4) sont réalisés entièrement ou partiellement à partir d'une pièce de tôle qui a obtenu, par pliage des bords, une section en forme de U ou de L avec une zone de base (5) s'étendant sensiblement perpendiculairement à l'axe du volant et des zones de branches (6, 7, 8) s'étendant sensiblement parallèlement à l'axe du volant, caractérisée en ce que les branches (6, 7, 8), vues en direction longitudinale, sont façonnées en forme ondulée de telle sorte que les extrémités de branches (9) proches de la base ne subissent pratiquement aucun écart par rapport au plan initial, que les extrémités de branches libres (10) éloignées de la base présentent l'écart maximum et que l'écart est réalisé en augmentation constante avec la hauteur des branches.

2. Armature de volant selon la revendication 1, caractérisée en ce que le façonnage des branches (6, 7, 8), vu en direction longitudinale, est réalisé en forme sinusoïdale.

3. Armature de volant selon la revendication 1, caractérisée en ce que le façonnage des branches (6, 7, 8), vu en direction longitudinale, est réalisé en tant que succession de segments d'arc de cercle.

4. Armature de volant selon la revendication 1, caractérisée en ce que le façonnage des branches (6, 7, 8), vu en direction longitudinale, est réalisé en forme arrondie et en zigzag.

5. Armature de volant selon l'une quelconque des revendications 1 à 4, caractérisée en ce que le façonnage des branches (6, 7, 8), vu en direction longitudinale, est réalisé avec un écart de grandeurs différentes, à partir du plan initial.

6. Armature de volant selon l'une quelconque des revendications 1 à 5, caractérisée en ce que le façonnage des branches (6, 7, 8), vu en direction longitudinale, est réalisé avec une période de grandeurs différentes

7. Armature de volant selon l'une quelconque des revendications 1 à 6, caractérisée en ce que le façonnage a permis de produire un écrouissage sélectif du matériau dans l'armature dans son ensemble ou dans des zones partielles.

8. Armature de volant selon la revendication 8, caractérisée en ce que l'écrouissage est annulé par zone au moyen d'un traitement thermique sélectif.

9. Armature de volant selon l'une quelconque des revendications 1 à 8, caractérisée en ce que le façonnage, du point de vue de son étendue et de son agencement, est réalisé de telle sorte que le volant, dans le cas d'une déformation due à une collision, peut dissiper un maximum de travail de déformation sans grande charge de pointe.

10. Armature de volant selon l'une quelconque des revendications 1 à 9, caractérisée en ce que les façonnages sont adaptés au matériau de départ choisi.
